# EUROPEAN PATENT SPECIFICATION

(11) **EP 3 326 699 B1**
(45) Date of publication and mention of the grant of the patent: **21.04.2021**
(21) Application number: 17190754.6
(22) Date of filing: 13.09.2017
(51) Int. Cl.: A63B 21/00, B32B 25/20

(54) **DOUBLE-SIDED GYM FLOORING TOWEL**
DOPPELSEITIGES BODENTUCH FÜR EIN FITNESSSTUDIO
SERVIETTE DE SOL DE GYMNASTIQUE DOUBLE FACE

(30) Priority: 28.11.2016 TW 105139081
(43) Date of publication of application: 30.05.2018
(73) Proprietor: GROUNDING INC., Tortola (VG)
(72) Inventor: TSAI, Victor, TAIPEI CITY (TW)
(74) Representative: Straus, Alexander

(56) References cited:
- EP-A1- 2 808 061
- CN-U- 202 315 081
- TW-U- M 427 965
- US-A1- 2013 171 432

## Description

### BACKGROUND OF THE INVENTION

### 1. Field of the Invention

The present invention relates to sports towels, and more particularly, to a double-sided gym flooring towel.

### 2. Description of the Related Art

Taiwan Patent 1513436 discloses double-sided anti-slip gym flooring towel for floor exercises. This design of double-sided anti-slip gym flooring towel comprises a fabric layer, and two perforated anti-slip layers respectively bonded to the opposing top and bottom surfaces of the fabric layer for enabling the top and bottom surfaces to be partially exposed to the outside. The fabric layer is adapted to provide the skin of the user with an anti-slip effect when the user is sweating; the perforated anti-slip layers are adapted to provide the skin of the user with an anti-slip effect when the skin of the user is dry, and thus, the double-sided anti-slip gym flooring towel can provide an anti-slip effect either when dry or wet. TWM 427965 U discloses a ventilative yoga mat comprising a foldable fabric layer of soft cloth with water absorption capacity and having a rectangular shape. Two respectively opposing long and short sides define on each of opposing top and bottom surface a central zone and two lateral zones The mat further has a first and second anti-slip layer. CN 202315081 U discloses a double-sided anti-slip yoga mat towel, comprising a towel body, and anti-slip strips distributed on the front face of the towel body and anti-slip particles are distributed on the bottom surface of the towel body, so that relative slippage between the double-sided anti-slip yoga mat towel and a yoga mat can be prevented. EP 2808061 A1 discloses a double-sided anti-slip towel mat including a fabric layer, a first anti-slip layer made in a predetermined pattern and bonded to the top face of the fabric layer and defining a plurality of first openings through which a part of the top face of the fabric layer is exposed to the outside, and a second anti-slip layer made in a predetermined pattern and bonded to the bottom face of the fabric layer defines a plurality of second openings exposing a part of the top face to the outside.

However, the aforesaid prior art designs do not disclose the technical features of the arrangement of each anti-slip layer in a continuous form and the location of each anti-slip layer on the top or bottom surface of the fabric layer. The arrangement of each anti-slip layer in a continuous piece enhances its security on the fabric layer. Further, the location of each anti-slip layer on the fabric layer must be within the area where the user will frequently touch. Therefore, the aforesaid prior art designs still have room for improvement.

### SUMMARY OF THE INVENTION

The present invention has been accomplished under the circumstances in view. It is the main object of the present invention to provide a double-sided gym flooring towel, which has an anti-slip layer covered over each selected zone of a fabric layer in the form of a continuous piece without disconnection, which can help to be secured onto the fabric layer.

It is another object of the present invention to provide a double-sided gym flooring towel, which has an anti-slip layer bonded securely onto two frequently used lateral zones of a fabric layer thereof, providing an optimal anti-slip effect.

To achieve these and other objects of the present invention a double-sided gym flooring towel comprises a fabric layer, a first anti-slip layer and a second anti-slip layer. The fabric layer is a foldable piece of soft cloth with water absorption capacity, having a rectangular shape with two opposing long sides and two opposing short sides. Further, the fabric layer defines on each of opposing top and bottom surfaces thereof a central zone and two opposing lateral zones. The two lateral zones are respectively located at two opposite lateral sides of the central zone, and respectively disposed adjacent to the two opposing short sides. The first anti-slip layer is bonded to the top surface of the fabric layer within the respective two opposing lateral zones. Further, the first anti-slip layer comprises a plurality of first openings that expose the top surface of the fabric layer. These first openings are respectively surrounded by the first anti-slip layer, and kept apart from one another. The second anti-slip layer is bonded to the bottom surface of the fabric layer within the respective two opposing lateral zones. Further, the second anti-slip layer comprises a plurality of second openings that expose the bottom surface of the fabric layer. These second openings are respectively surrounded by the second anti-slip layer, and kept apart from one another. Further, in the first anti-slip layer within the two lateral zones of said top surface of said fabric layer and a part of the first anti-slip layer are exposed to the outside. In the second anti-slip layer within the two lateral zones a part of the bottom surface of the fabric layer and a part of the second anti-slip layer are exposed to the outside. The first and second anti-slip layers are flexible layers, such that when the fabric layer is folded, the first anti-slip layer and the second anti-slip layer are folded curved along with the fabric layer.

Thus, since the first anti-slip layer and the second anti-slip layer are respectively a continuous piece without disconnection, the arrangement of the first anti-slip layer and the second anti-slip layer greatly enhances the secure effect of the fabric layer. Further, since the first anti-slip layer and the second anti-slip layer are respectively arranged on the respective lateral zones of the opposing top and bottom surfaces of the fabric layer, the double-sided gym flooring towel provides excellent anti-slip effects.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a top view of a double-sided gym flooring towel in accordance with a first embodiment of the present invention.
FIG. 2 is an enlarged view of a part of FIG. 1.
FIG. 3 is a sectional view taken along line 3-3 of FIG. 2.
FIG. 4A illustrates one design example of the first openings of the first anti-slip layer of the double-sided gym flooring towel in accordance with the first embodiment of the present invention.
FIG. 4B illustrates another design example of the first openings of the first anti-slip layer of the double-sided gym flooring towel in accordance with the first embodiment of the present invention.
FIG. 4C illustrates still another design example of the first openings of the first anti-slip layer of the double-sided gym flooring towel in accordance with the first embodiment of the present invention.
FIG. 4D illustrates still another design example of the first openings of the first anti-slip layer of the double-sided gym flooring towel in accordance with the first embodiment of the present invention.
FIG. 5 is a schematic drawing illustrating a status of use of the double-sided gym flooring towel in accordance with the first embodiment of the present invention.
FIG. 6 is a top view of an alternate form of the double-sided gym flooring towel in accordance with the first embodiment of the present invention.
FIG. 7 is a top view of a double-sided gym flooring towel in accordance with a second embodiment of the present invention.
FIG. 8 is a top view of a double-sided gym flooring towel in accordance with a third embodiment of the present invention.

### DETAILED DESCRIPTION OF THE INVENTION

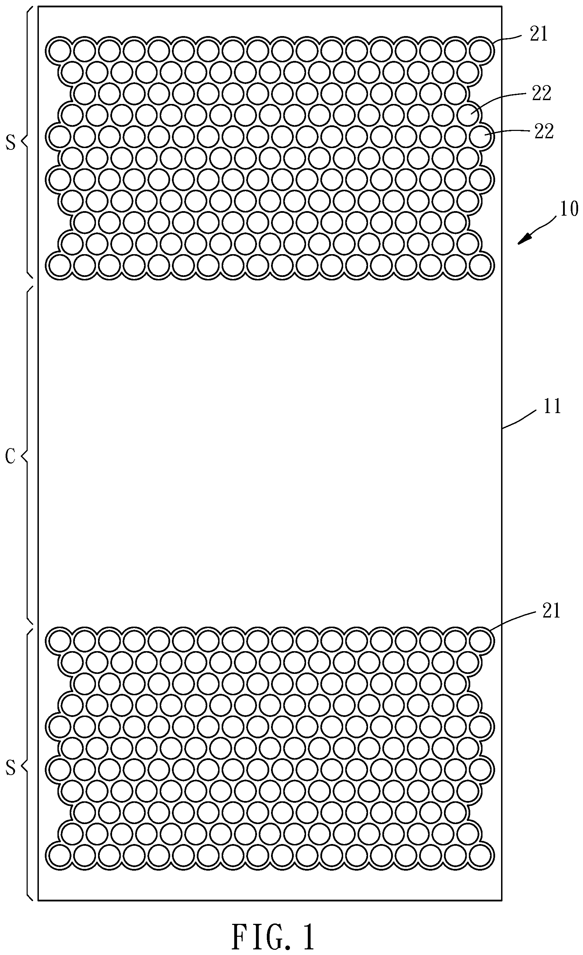

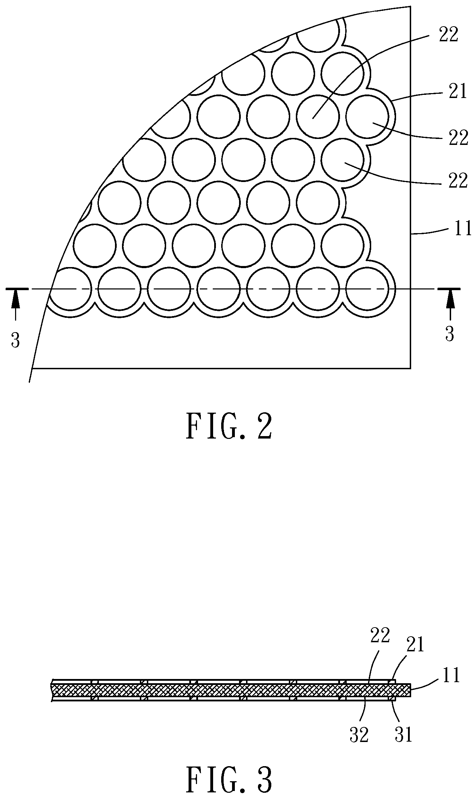

Referring to FIGS. 1-3, a double-sided gym flooring towel **10** in accordance with a first embodiment of the present invention is shown. The double-sided gym flooring towel **10** comprises a fabric layer **11,** a first anti-slip layer **21** and a second anti-slip layer **31.**

The fabric layer **11** is a foldable piece of soft cloth with water absorption capacity, having a rectangular shape with two opposing long sides and two opposing short sides. The fabric layer **11** defines on each of opposing top and bottom surfaces thereof a central zone **C** and two opposing lateral zones **S.** The two lateral zones **S** are respectively located at two opposite lateral sides of the central zone C and respectively disposed adjacent to the two opposing short sides.

The first anti-slip layer **21** is bonded to the top surface of the fabric layer **11** and covered over the whole area of the respective lateral zones **S,** comprising a plurality of first openings **22** that expose the top surface of the fabric layer **11.** The first openings **22** are respectively surrounded by the first anti-slip layer **21** and kept apart from one another. Further, in the first anti-slip layer **21** within the two lateral zones, there must be a part of the top surface of the fabric layer **11** and a part of the first anti-slip layer **21** exposed to the outside; in the second anti-slip layer **31** within the two lateral zones, there must be a part of the bottom surface of the fabric layer **11** and a part of the second anti-slip layer **31** exposed to the outside. The first anti-slip layer **21** is a flexible layer that can be curved with the fabric layer **11** when folding. Also, the second anti-slip layer **31** is a flexible layer that can be curved with the fabric layer **11** when folding.

The part of the first anti-slip layer **21** on each lateral zone **S** outside the respective first openings **22** is a continuous piece without disconnection.

The second anti-slip layer **31** is bonded to the bottom surface of the fabric layer **11** and covered over the whole area of the respective lateral zones **S,** comprising a plurality of second openings **32** that expose the top surface of the fabric layer **11.** The second opening **32** are respectively surrounded by the second anti-slip layer **31** and kept apart from one another. The part of the second anti-slip layer **31** on each lateral zone **S** outside the respective second openings **32** is a continuous piece without disconnection.

In actual application, the first anti-slip layer **21** and the second anti-slip layer **31** can be spaced from the border edge of the fabric layer **11** by a predetermined distance, facilitating fabrication. However, the first anti-slip layer **21** and the second anti-slip layer **31** can also be configured to respectively extend to the border edge of the fabric layer **11.** This alternate arrangement can be directly understood, and therefore, it is no need to express by drawings. However, during fabrication of this alternate arrangement, the connection relationship between the first and second anti-slip layer **21, 31** and the fabric layer must be seriously considered. The fabrication of this alternate arrangement is complicated.

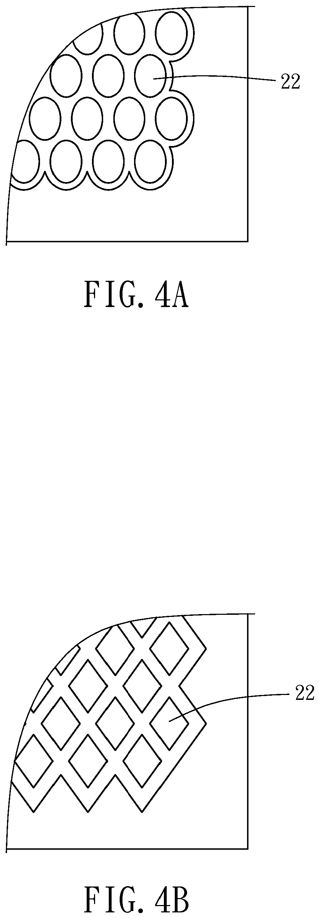

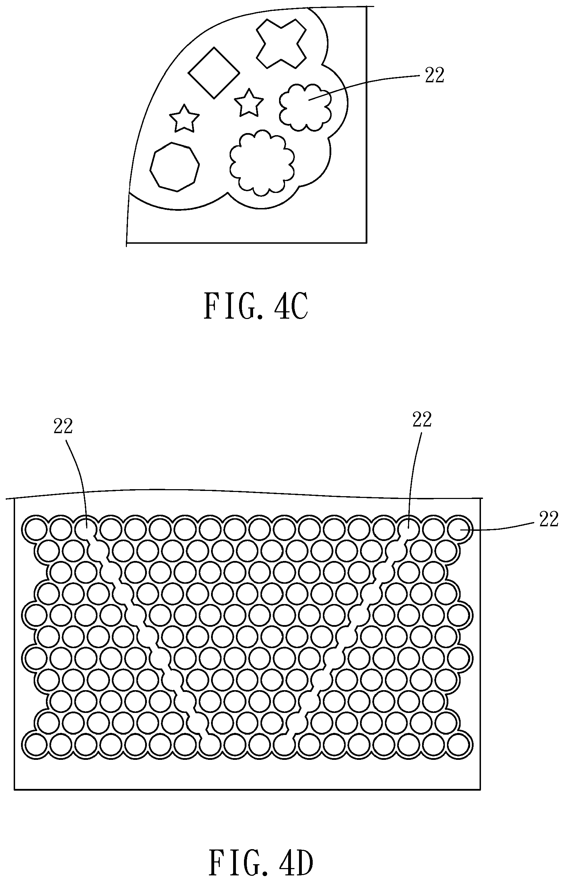

Referring to FIGS. 4A-4D, the first openings **22** and the second openings **32** (not shown) can be configured to exhibits a circular shape, oval shape, polygonal shape, or any other irregular shape. In this embodiment, the first openings **22** and the second openings **32** have a circular shape. Further, the first openings **22** are spaced from one another and arranged in an array; the second openings **32** (not shown) are also spaced from one another and arranged in an array.

After understood the structural details of the first embodiment of the present invention, the application of the double-sided gym flooring towel **10** is explained hereinafter.

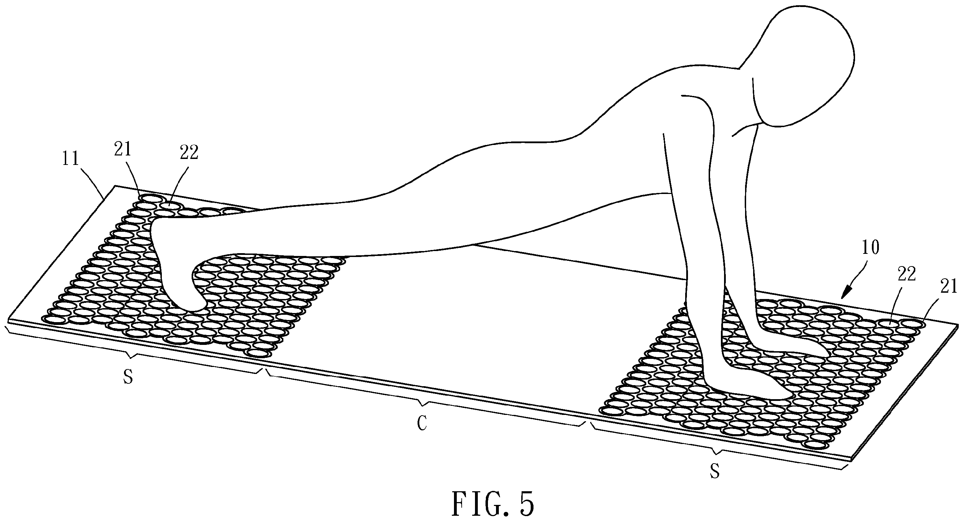

Referring to FIGS. 1-5, when using the double-sided gym flooring towel **10,** put the double-sided gym flooring towel **10** on the floor or a floor mat in a top-facing position. In the example shown in the drawing, the double-sided gym flooring towel **10** is placed on the floor. Thereafter, the user can perform floor exercises on the double-sided gym flooring towel **10.** In exercises, the part of the fabric layer **11** that is exposed to the first openings **22** and the part of the first anti-slip layer **21** that is touched by the user provide sweat absorption and anti-skid effects; the second anti-slip layer **31** that is located on the bottom surface of the fabric layer **11** and supported on the floor provides an anti-slip effect. Since the first anti-slip layer **21** and the second anti-slip layer **31** are covered over the whole areas of the lateral zones **S** of the opposing top and bottom surfaces of the fabric layer **11** and the lateral zones **S** are the areas that are most frequently used in Yoga exercises, the invention provides the most frequently used areas with effective anti-slip effects. Further, because the first anti-slip layer **21** and the second anti-slip layer **31** are respectively covered on the lateral zones **S** of the opposing top and bottom surfaces of the fabric layer **11,** the user in the use of the double-sided gym flooring towel **10** clearly knows that there must be an anti-slip structure below, so the uses can get more peace of mind in exercises. Further, in the first or second anti-slip layer **21,31** within any area corresponding to the palm of a human hand excluding the finger area, there must be a part of the fabric layer **11** and a part of the first or second anti-slip layer **21,31** exposed to the outside, thus the user definitely will touch the fabric layer **11** and the first or second anti-slip layer **21,31** at the same time when performing exercises, ensuring an optimal anti-slip effect.

Since the first anti-slip layer **21** or second anti-slip layer **31** within each lateral zone **S** is a continuous piece without disconnection, the arrangement of the first anti-slip layer **21** and the second anti-slip layer **31** greatly enhances the secure effect of the fabric layer **11.** Further, since the central zones **C** of the top and bottom surfaces of the fabric layer **11** are not covered by the first anti-slip layer **21** or second anti-slip layer **31,** if the user sweats during the exercise, the user can use the central zone **C** of the top or bottom surface of the fabric layer **11** to wipe sweat away, and then continue the follow-up motion.

It is to be noted that the central zone **C** of the top surface of the fabric layer **11** and the central zone **C** of the bottom surface of the fabric layer **11** can be different in size, i.e., as long as the two lateral zones **S** cover the area commonly used by the user, the size of the two lateral zones **S** of the top surface of the fabric layer **11** and the size of the two lateral zones **S** of the bottom surface of the fabric layer **11** can be different according to the designer's settings at the factory.

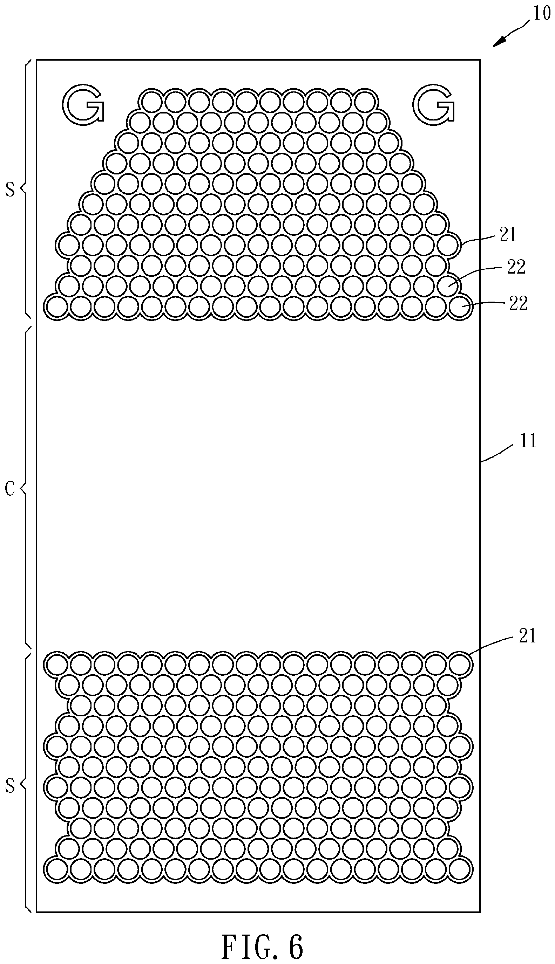

Further, as illustrated in FIG. 6, the first anti-slip layer **21** can be configured to cover only a part of the two lateral zones **S** of the top surface of the fabric layer **11;** the second anti-slip layer **31** can also be configured to cover only a part of the two lateral zones **S** of the bottom surface of the fabric layer **11.** In this case, the empty areas can be used for other purposes, for example, for printing a trademark or text via ink or anti-slip material same to the first anti-slip layer 21 to exhibit a wide variation in design.

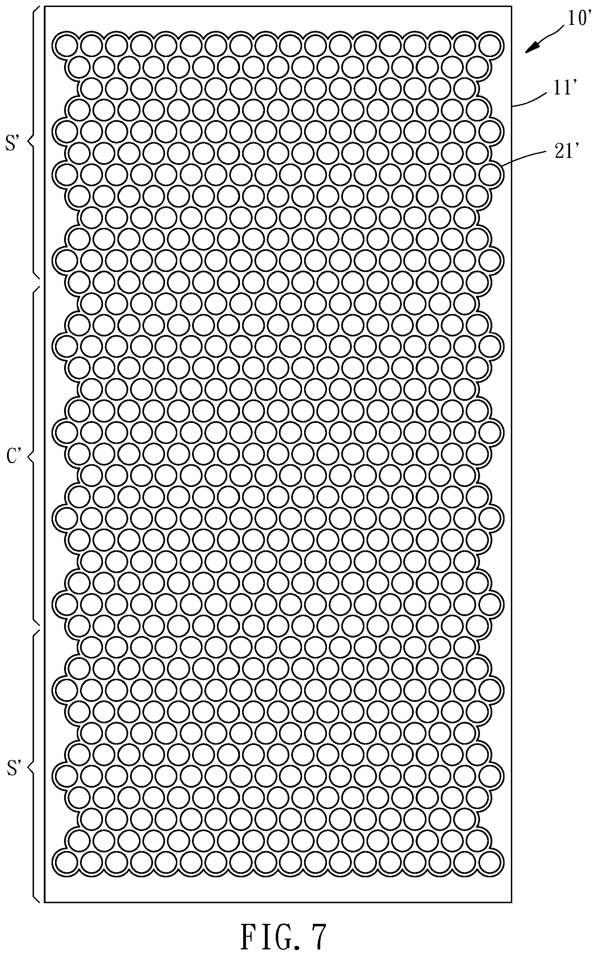

Referring to FIG. 7, a double-sided gym flooring towel **10'** in accordance with a second embodiment of the present invention is shown. This second embodiment is substantially similar to the aforesaid first embodiment with the exceptions as follows:
The first anti-slip layer **21'** is covered over the two lateral zones **S'** of the top surface of the fabric layer **11'** and the central zone **C'** of the top surface of the fabric layer **11',** and made in the form of a continuous piece without disconnection.

The second anti-slip layer (that is symmetric to the first anti-slip layer, and thus, not expressed by drawings) is covered over the two lateral zones **S'** of the bottom surface of the fabric layer **11'** and the central zone **C'** of the bottom surface of the fabric layer **11',** and made in the form of a continuous piece without disconnection.

The first anti-slip layer **21'** and the second anti-slip layer **31'** can be configured to cover the central zones **C'** of the top and bottom surfaces of the fabric layer **11'** respectively. Alternatively, the double-sided gym flooring towel **10"** can be so configured that simply the first anti-slip layer **21'** or second anti-slip layer **31'** covers the central zone **C'** of the top or bottom surface of the fabric layer **11'** to satisfy different requirements.

Having the first anti-slip layer **21'** or second anti-slip layer **31'** on the central zone **C'** of the top or bottom surface of the fabric layer **11'** provides a better anti-slip effect, however, under this arrangement, the respective central zone **C'** can no longer be used for wiping sweat away.

Other structural details of this second embodiment and the effect this second embodiment can achieve are same as the aforesaid first embodiment, and thus, we will not repeat them.

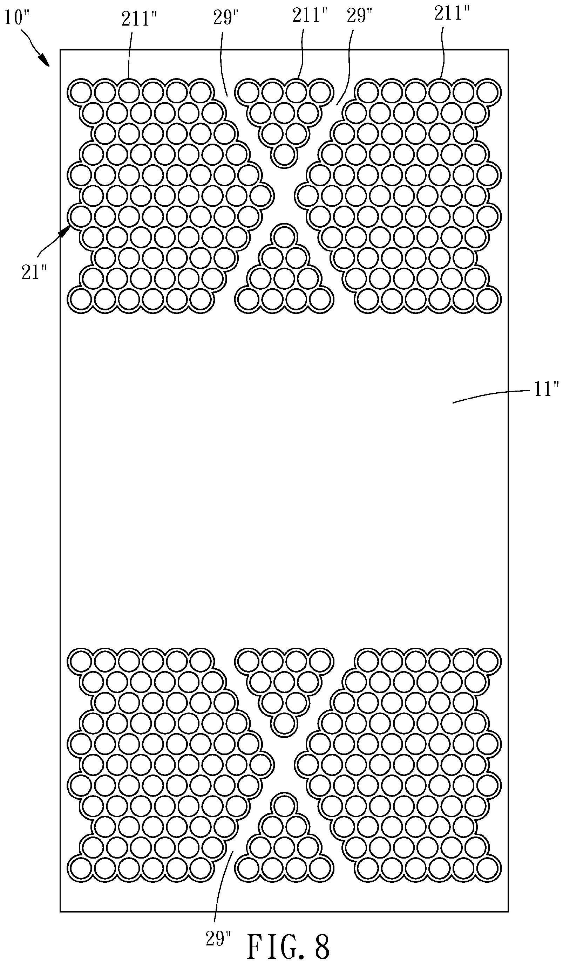

Referring to FIG. 8, a double-sided gym flooring towel **10"** in accordance with a third embodiment of the present invention is shown. This third embodiment is substantially similar to the aforesaid first embodiment with the exceptions as follows:
The first anti-slip layer **21"** is divided into multiple first sub anti-slip portions **211"** by at least one first delimited path **29".** The width of each first delimited path **29"** may be smaller than the maximum width of the palm of a human hand excluding the finger area. Multiple first delimited paths **29"** may be provided to divide the first anti-slip layer **21"** into multiple first sub anti-slip portions **211".** The second anti-slip layer (that is located on the bottom surface of the fabric layer **11"** in the same manner as the first anti-slip layer **21",** and thus, it is not expressed by drawings) may be divided into a plurality of second sub anti-slip portions by at least one delimited path where the width of each delimited path may be smaller than the maximum width of the palm of a human hand excluding the finger area. In this embodiment, multiple delimited paths **29"** may be provided to divide the first anti-slip layer **21"** and the second anti-slip layer into multiple first sub anti-slip portions **211"** and multiple second sub anti-slip portions respectively, and also to expose the top and bottom surfaces of the fabric layer **11"** respectively.

Further, the design of the delimited paths **29"** provide the first anti-slip layer **21"** and the second anti-slip layer with a visual effect, making them look less monotonous. Further, since the multiple delimited paths **29"** can expose the opposing top and bottom surfaces of the fabric layer **11"** respectively, they provide better sweat absorption effects. Further, in case the width of each delimited path **29"** is smaller than the maximum width of the palm of a human hand excluding the finger area, the multiple delimited paths **29"** may greatly enhance the anti-slip effect either when the first anti-slip layer **21"** or second anti-slip layer is dry or wet.

Other structural details of this third embodiment and the effect this third embodiment can achieve are same as the aforesaid first embodiment, and thus, we will not repeat them.

## Claims

1. A double-sided gym flooring towel (10)(10')(10"), comprising:
a fabric layer (11)(11')(11") being a foldable piece of soft cloth with water absorption capacity, said fabric layer (11)(11')(11") having a rectangular shape with two opposing long sides and two opposing short sides, said fabric layer (11)(11')(11") defining on each of opposing top and bottom surfaces thereof a central zone (C)(C') and two opposing lateral zones (S)(S'), said two lateral zones (S)(S') being respectively located at two opposite lateral sides of said central zone (C)(C') and respectively disposed adjacent to the said two opposing short sides;
the towel further comprising:
a first anti-slip layer (21)(21')(21") bonded to said top surface of said fabric layer (11)(11')(11") within the respective said two opposing lateral zones (S)(S'), said first anti-slip layer (21)(21')(21") comprising a plurality of first openings (22) that expose said top surface of said fabric layer (11)(11')(11"), said first openings (22) being respectively surrounded by said first anti-slip layer (21)(21')(21") and kept apart from one another; and
a second anti-slip layer (31) bonded to said bottom surface of said fabric layer (11)(11')(11") within the respective said two opposing lateral zones (S)(S'), said second anti-slip layer (31) comprising a plurality of second openings (32) that expose said bottom surface of said fabric layer (11)(11')(11"), said second openings (32) being respectively surrounded by said second anti-slip layer (31) and kept apart from one another;
wherein in said first anti-slip layer (21)(21')(21") within the two lateral zones (S)(S') of said top surface of said fabric layer (11)(11')(11") and a part of said first anti-slip layer (21)(21')(21") are exposed to the outside; in said second anti-slip layer (31) within the two lateral zones (S)(S') a part of said bottom surface of said fabric layer (11)(11')(11") and a part of said second anti-slip layer (31) are exposed to the outside;
**characterized in that**
the first and second anti-slip layers are flexible layers, wherein when the fabric layer (11)(11')(11") is folded, the first anti-slip layer (21)(21')(21") and the second anti-slip layer (31) are curved with the fabric layer (11)(11')(11").

2. The double-sided gym flooring towel (10)(10')(10") as claimed in claim 1, wherein the part of said first anti-slip layer (21)(21')(21") within each respective said lateral zone (S)(S') of said top surface of said fabric layer (11)(11')(11") beyond the respective said openings is a continuous piece; the part of said second anti-slip layer (31) within each respective said lateral zone (S)(S') of said bottom surface of said fabric layer (11)(11')(11") beyond the respective said openings is a continuous piece.

3. The double-sided gym flooring towel (10)(10')(10") as claimed in claim 1, wherein said first anti-slip layer (21)(21')(21") is fully covered over the said two lateral zones (S)(S') of said top surface of said fabric layer (11)(11')(11"); said second anti-slip layer (31) is fully covered over the said two lateral zones (S)(S') of said bottom surface of said fabric layer (11)(11')(11").

4. The double-sided gym flooring towel (10') as claimed in claim 3, wherein said first anti-slip layer (21') covers the respective said lateral zones (S') of said top surface of said fabric layer (11') as well as the said central zone (C') of said top surface of said fabric layer (11') in the form of one continuous piece.

5. The double-sided gym flooring towel (10') as claimed in claim 3, wherein said second anti-slip layer covers the respective said lateral zones (S') of said bottom surface of said fabric layer (11') as well as the said central zone (C') of said bottom surface of said fabric layer (11') in the form of one continuous piece.

6. The double-sided gym flooring towel (10') as claimed in claim 3, wherein said first anti-slip layer (21') covers the respective said lateral zones (S') of said top surface of said fabric layer (11') as well as the said central zone (C') of said top surface of said fabric layer (11') in the form of one continuous piece; said second anti-slip layer covers the respective said lateral zones (S') of said bottom surface of said fabric layer (11') as well as the said central zone (C') of said bottom surface of said fabric layer (11') in the form of one continuous piece.

7. The double-sided gym flooring towel (10)(10')(10") as claimed in claim 1, wherein said first anti-slip layer (21)(21')(21") is spaced from the border edge of said fabric layer (11)(11')(11") at a predetermined distance; said second anti-slip layer (31) is spaced from the border edge of said fabric layer (11)(11')(11") at a predetermined distance.

8. The double-sided gym flooring towel (10)(10')(10") as claimed in claim 1, wherein said first openings (22) and said second openings (32) are selectively made in a circular, oval, polygonal or irregular shape.

9. The double-sided gym flooring towel (10)(10')(10") as claimed in claim 1, wherein said first openings (22) are spaced from one another and arranged in an array; said second openings (32) are spaced from one another and arranged in an array.

10. The double-sided gym flooring towel (10)(10')(10") as claimed in claim 1, wherein the said central zone (C)(C') of said top surface of said fabric layer (11)(11')(11") and the said central zone (C)(C') of said bottom surface of said fabric layer (11)(11')(11") are different in size.

## Patentansprüche

1. Doppelseitiges Sport-Bodenhandtuch (10)(10')(10"), welches umfasst:
eine Gewebeschicht (11)(11')(11"), die ein faltbares Stück eines weichen Stoffes mit Wasserabsorptionsvermögen ist, worin die Gewebeschicht (11)(11')(11") eine rechteckige Form mit zwei gegenüberliegenden langen Seiten und zwei gegenüberliegenden kurzen Seiten aufweist, worin die Gewebeschicht (11)(11')(11") auf jeder ihrer gegenüberliegenden Ober- und Unterseiten eine zentrale Zone (C)(C') und zwei gegenüberliegende Seitenzonen (S)(S') definiert, worin die beiden Seitenzonen (S)(S') jeweils an zwei gegenüberliegenden seitlichen Seiten der zentralen Zone (C)(C') angeordnet sind und jeweils zu den beiden gegenüberliegenden kurzen Seiten benachbart angeordnet sind;
worin das Handtuch weiterhin umfasst:
eine erste Antirutschschicht (21)(21')(21"), die mit der Oberseite der Gewebeschicht (11)(11')(11") innerhalb den entsprechenden zwei gegenüberliegenden Seitenzonen (S)(S') verbunden ist, worin die erste Antirutschschicht (21)(21')(21") eine Vielzahl von ersten Öffnungen (22) aufweist, die die obere Oberfläche der Gewebeschicht (11)(11')(11") freilegen, worin die ersten Öffnungen (22) jeweils von der ersten Antirutschschicht (21)(21')(21") umgeben sind und voneinander getrennt gehalten werden und
eine zweite Antirutschschicht (31), die mit der unteren Oberfläche der Gewebeschicht (11)(11')(11") innerhalb den entsprechenden zwei gegenüberliegenden Seitenzonen (S)(S') verbunden ist, worin die zweite Antirutschschicht (31) eine Vielzahl von zweiten Öffnungen (32) umfasst, die die untere Oberfläche der Gewebeschicht (11)(11')(11") freilegen, worin die zweiten Öffnungen (32) jeweils von der zweiten Antirutschschicht (31) umgeben sind und voneinander getrennt gehalten werden;
worin in der ersten Antirutschschicht (21)(21')(21") innerhalb der beiden Seitenzonen (S)(S') der Oberseite der Gewebeschicht (11)(11')(11") und ein Teil der ersten Antirutschschicht (21)(21')(21") nach außen freigelegt sind; in der zweiten Antirutschschicht (31) innerhalb der beiden Seitenzonen (S)(S') ein Teil der unteren Oberfläche der Gewebeschicht (11)(11')(11") und ein Teil der zweiten Antirutschschicht (31) nach außen freigelegt sind
**dadurch gekennzeichnet, dass**
die erste und die zweite Antirutschschicht flexible Schichten sind, worin wenn die Gewebeschicht (11)(11')(11") gefaltet ist, die erste Antirutschschicht (21)(21')(21") und die zweite Antirutschschicht (31) mit der Gewebeschicht (11)(11')(11") gekrümmt sind.

2. Doppelseitiges Sport-Bodenhandtuch (10)(10')(10") nach Anspruch 1, worin der Teil der ersten Antirutschschicht (21)(21')(21") innerhalb der entsprechenden Seitenzone (S)(S') der Oberseite der Gewebeschicht (11)(11')(11") jenseits der entsprechenden Öffnungen ein durchgehendes Stück ist; und der Teil der zweiten Antirutschschicht (31) innerhalb jeder entsprechenden Seitenzone (S)(S') der unteren Oberfläche der Gewebeschicht (11)(11')(11") jenseits der entsprechenden Öffnungen ein durchgehendes Stück ist.

3. Doppelseitiges Sport-Bodenhandtuch (10)(10')(10") nach Anspruch 1, worin die erste Antirutschschicht (21)(21')(21") vollständig über die beiden Seitenzonen (S)(S') der Oberseite der Gewebeschicht (11)(11')(11") bedeckt ist; die zweite Antirutschschicht (31) vollständig über die beiden Seitenzonen (S)(S') der Unterseite der Gewebeschicht (11)(11')(11") bedeckt ist.

4. Doppelseitiges Sport-Bodenhandtuch (10') nach Anspruch 3, worin die erste Antirutschschicht (21') die entsprechenden seitlichen Bereiche (S') der Oberseite der Gewebeschicht (11') sowie den mittleren Bereich (C') der Oberseite der Gewebeschicht (11') in Form eines durchgehenden Stücks bedeckt.

5. Doppelseitiges Sport-Bodenhandtuch (10') nach Anspruch 3, worin die zweite Antirutschschicht die entsprechenden seitlichen Bereiche (S') der Unterseite der Gewebeschicht (11') sowie den mittleren Bereich (C') der Unterseite der Gewebeschicht (11') in Form eines durchgehenden Stückes bedeckt.

6. Doppelseitiges Sport-Bodenhandtuch (10') nach Anspruch 3, worin die erste Antirutschschicht (21') die entsprechenden seitlichen Bereiche (S') der Oberseite der Gewebeschicht (11') sowie den mittleren Bereich (C') der Oberseite der Gewebeschicht (11') in Form eines durchgehenden Stückes bedeckt; die zweite Antirutschschicht die entsprechenden Seitenzonen (S') der unteren Oberfläche der Gewebeschicht (11') sowie die zentrale Zone (C') der unteren Oberfläche der Gewebeschicht (11') in Form eines durchgehenden Stücks bedeckt.

7. Doppelseitiges Sport-Bodenhandtuch (10)(10')(10") nach Anspruch 1, worin die erste Antirutschschicht (21)(21')(21") von der Randkante der Gewebeschicht (11)(11')(11") in einem vorbestimmten Abstand beabstandet ist; die zweite Antirutschschicht (31) von der Randkante der Gewebeschicht (11)(11')(11") in einem vorbestimmten Abstand beabstandet ist.

8. Doppelseitiges Sport-Bodenhandtuch (10)(10')(10") nach Anspruch 1, worin die ersten Öffnungen (22) und die zweiten Öffnungen (32) wahlweise in einer kreisförmigen, ovalen, polygonalen oder unregelmäßigen Form ausgebildet sind.

9. Doppelseitiges Sport-Bodenhandtuch (10)(10')(10") nach Anspruch 1, worin die ersten Öffnungen (22) voneinander beabstandet und in einer Reihe angeordnet sind; die zweiten Öffnungen (32) voneinander beabstandet und in einer Reihe angeordnet sind.

10. Doppelseitiges Sport-Bodenhandtuch (10)(10')(10") nach Anspruch 1, worin der mittlere Bereich (C)(C') der Oberseite der Gewebeschicht (11)(11')(11") und der mittlere Bereich (C)(C') der Unterseite der Gewebeschicht (11)(11')(11") unterschiedlich groß sind.

## Revendications

1. Serviette de gymnastique double face (10)(10')(10"), comprenant:
une couche de tissu (11)(11')(11") étant une pièce de tissu doux pliable avec une capacité d'absorption d'eau, ladite couche de tissu (11)(11')(11") ayant une forme rectangulaire avec deux côtés longs opposés et deux côtés courts opposés, ladite couche de tissu (11)(11')(11") définissant sur chacune de ses surfaces supérieure et inférieure opposées une zone centrale (C)(C') et deux zones latérales opposées (S)(S'), lesdites deux zones latérales (S)(S') étant respectivement situées sur deux côtés latéraux opposés de ladite zone centrale (C)(C') et respectivement disposées de manière adjacente auxdits deux côtés courts opposés;
la serviette comprenant en outre:
une première couche antidérapante (21)(21')(21") collée à ladite surface supérieure de ladite couche de tissu (11)(11')(11") à l'intérieur desdites deux zones latérales opposées (S)(S') respectives, ladite première couche antidérapante (21)(21')(21") comprenant une pluralité de premières ouvertures (22) qui exposent ladite surface supérieure de ladite couche de tissu (11)(11')(11"), lesdites premières ouvertures (22) étant respectivement entourées par ladite première couche antidérapante (21)(21')(21") et maintenues séparées les unes des autres; et
une seconde couche antidérapante (31) liée à ladite surface inférieure de ladite couche de tissu (11)(11')(11") à l'intérieur desdites deux zones latérales opposées respectives (S)(S'), ladite seconde couche antidérapante (31) comprenant une pluralité de secondes ouvertures (32) qui exposent ladite surface inférieure de ladite couche de tissu (11)(11')(11"), lesdites secondes ouvertures (32) étant respectivement entourées par ladite seconde couche antidérapante (31) et maintenues à distance les unes des autres;
dans lequel dans ladite première couche antidérapante (21)(21')(21") à l'intérieur des deux zones latérales (S)(S') de ladite surface supérieure de ladite couche de tissu (11)(11')(11") et une partie de ladite première couche antidérapante (21)(21')(21") sont exposées à l'extérieur; dans ladite deuxième couche antidérapante (31), à l'intérieur des deux zones latérales (S)(S'), une partie de ladite surface inférieure de ladite couche de tissu (11)(11')(11") et une partie de ladite deuxième couche antidérapante (31) sont exposées à l'extérieur;
**caractérisé en ce que**
les première et deuxième couches antidérapantes sont des couches flexibles, dans lesquelles, lorsque la couche de tissu (11)(11')(11") est pliée, la première couche antidérapante (21)(21')(21") et la deuxième couche antidérapante (31) sont courbées avec la couche de tissu (11)(11')(11").

2. Serviette de gymnastique double face (10)(10')(10") selon la revendication 1, dans laquelle la partie de ladite première couche antidérapante (21)(21')(21") à l'intérieur de chaque dite zone latérale respective (S)(S') de ladite surface supérieure de ladite couche de tissu (11)(11')(11") au-delà desdites ouvertures respectives est une pièce continue; et la partie de ladite seconde couche antidérapante (31) à l'intérieur de chaque dite zone latérale respective (S)(S') de ladite surface inférieure de ladite couche de tissu (11)(11')(11") au-delà desdites ouvertures respectives est une pièce continue.

3. Serviette de gymnastique double face (10)(10')(10") selon la revendication 1, dans laquelle ladite première couche antidérapante (21)(21')(21") est entièrement recouverte sur lesdites deux zones latérales (S)(S') de ladite surface supérieure de ladite couche de tissu (11)(11')(11"); ladite deuxième couche antidérapante (31) est entièrement recouverte sur lesdites deux zones latérales (S)(S') de ladite surface inférieure de ladite couche de tissu (11)(11')(11").

4. Serviette de gymnastique double face (10') selon la revendication 3, dans laquelle ladite première couche antidérapante (21') recouvre lesdites zones latérales respectives (S') de ladite surface supérieure de ladite couche de tissu (11') ainsi que ladite zone centrale (C') de ladite surface supérieure de ladite couche de tissu (11') sous la forme d'une pièce continue.

5. Serviette de gymnastique double face (10') selon la revendication 3, dans laquelle ladite seconde couche antidérapante recouvre lesdites zones latérales (S') respectives de ladite surface inférieure de ladite couche de tissu (11') ainsi que ladite zone centrale (C') de ladite surface inférieure de ladite couche de tissu (11') sous la forme d'une pièce continue.

6. Serviette de gymnastique double face (10') selon la revendication 3, dans laquelle ladite première couche antidérapante (21') recouvre lesdites zones latérales respectives (S') de ladite surface supérieure de ladite couche de tissu (11') ainsi que ladite zone centrale (C') de ladite surface supérieure de ladite couche de tissu (11') sous la forme d'une pièce continue; ladite deuxième couche antidérapante couvre lesdites zones latérales (S') respectives de ladite surface inférieure de ladite couche de tissu (11') ainsi que ladite zone centrale (C') de ladite surface inférieure de ladite couche de tissu (11') sous la forme d'une pièce continue.

7. Serviette de gymnastique double face (10)(10')(10") selon la revendication 1, dans laquelle ladite première couche antidérapante (21)(21')(21") est espacée du bord de la bordure de ladite couche de tissu (11)(11')(11") à une distance prédéterminée; ladite seconde couche antidérapante (31) est espacée du bord de la bordure de ladite couche de tissu (11)(11')(11") à une distance prédéterminée.

8. Serviette de gymnastique double face (10)(10')(10") selon la revendication 1, dans laquelle lesdites premières ouvertures (22) et lesdites secondes ouvertures (32) sont sélectivement réalisées sous une forme circulaire, ovale, polygonale ou irrégulière.

9. Serviette de gymnastique double face (10)(10')(10") selon la revendication 1, dans laquelle lesdites premières ouvertures (22) sont espacées les unes des autres et disposées en réseau; lesdites secondes ouvertures (32) sont espacées les unes des autres et disposées en réseau.

10. Serviette de gymnastique double face (10)(10')(10") selon la revendication 1, dans laquelle ladite zone centrale (C)(C') de ladite surface supérieure de ladite couche de tissu (11)(11')(11") et ladite zone centrale (C)(C') de ladite surface inférieure de ladite couche de tissu (11)(11')(11") sont différentes en taille.
